# EUROPÄISCHE PATENTSCHRIFT

(11) **EP 3 707 396 B1**
(45) Veröffentlichungstag und Bekanntmachung des Hinweises auf die Patenterteilung: **15.10.2025**
(21) Anmeldenummer: 18799719.2
(22) Anmeldetag: 06.11.2018
(51) Int. Cl.: F16B 41/00, F16B 2/24, F16B 19/02

(54) **VERLIERSICHERUNG FÜR SCHRAUBEN UND MONTAGEEINHEIT**
SECURING MEANS FOR SCREWS, AND MOUNTING UNIT
DISPOSITIF ANTI-DÉTACHEMENT POUR VIS ET UNITÉ DE MONTAGE

(30) Priorität: 07.11.2017 DE 102017219724; 27.04.2018 DE 202018002180 U
(43) Veröffentlichungstag der Anmeldung: 16.09.2020
(73) Patentinhaber: Arnold Umformtechnik GmbH & Co. KG, 74670 Forchtenberg-Ernsbach (DE)
(72) Erfinder: FLECKENSTEIN, Uwe, 74639 Zweiflingen (DE); KLOTZ, Markus, 74639 Zweiflingen-Tiefensall (DE)
(74) Vertreter: Patentanwälte Ruff, Wilhelm, Beier, Dauster & Partner mbB
(86) Internationale Anmeldenummer: PCT/EP2018/080241
(87) Internationale Veröffentlichungsnummer: WO 2019/091945

(56) Entgegenhaltungen:
- EP-A2- 2 000 681
- EP-A2- 2 136 088
- DE-C- 955 101
- US-A- 4 621 961
- US-A1- 2014 357 137

## Beschreibung

Die Erfindung betrifft eine Verliersicherung für eine Schraube mit einer ringförmigen Hülse zum Einsetzen in eine Durchgangsbohrung in einem Werkstück. Die Erfindung betrifft auch eine Montageeinheit mit einer Schraube, einer Buchse und einer Verliersicherung.

Aus der europäischen Offenlegungsschrift EP 2 000 681 A2 ist eine zweiteilige Verliersicherung für eine Schraube bekannt. Die Verliersicherung weist eine ringförmige Hülse auf, die verschiebbar auf dem Schaft der Schraube angeordnet ist. An ihrem, dem Schraubenkopf zugewandten Ende weist die Hülse einen Innendurchmesser auf, der geringfügig größer ist als ein glatter Schaftabschnitt des Schafts, aber kleiner ist als der Außendurchmesser des Gewindeabschnitts des Schafts. Die ringförmige Hülse weist an ihrem, dem Kopf gegenüberliegenden Ende einen radialen Vorsprung auf, mit dem sie in einer weiteren ringförmigen Außenhülse angeordnet ist. Die ringförmige Hülse ist damit in einer Richtung vom Werkstück weg unverlierbar in der Außenhülse aufgenommen. Die Außenhülse ist dafür vorgesehen, in eine Durchgangsbohrung eines Werkstücks eingesteckt zu werden. Die ringförmige Hülse, die am Schraubenschaft anliegt, weist an ihrem oberen, dem Schraubenkopf zugewandten Ende nach innen und auf den Schaft zu abgebogene Federzungen auf. Diese Federzungen erstrecken sich ausgehend von der ringförmigen Hülse und ragen damit in Richtung auf eine Mittellängsachse der Hülse vor. Die ringförmige Hülse und die ringförmige Außenhülse sind jeweils rohrförmig ausgebildet und weisen infolgedessen eine durchgehende Umfangswand auf.

Aus der US-Patentschrift 4,621,961 ist eine zweiteilige Verliersicherung für eine Schraube bekannt. Die Verliersicherung besteht aus einer ersten Ringhülse, die den Schaft der Schraube unmittelbar umgibt und deren Innendurchmesser geringfügig größer ist als ein glatter Schaftabschnitt, aber kleiner ist als ein Außendurchmesser des Gewindeabschnitts der Schraube. Die erste Ringhülse weist blattförmige Federzungen auf, die sich vom kopfseitigen Ende der Ringhülse in Richtung auf den Gewindeabschnitt erstrecken. Die erste Ringhülse weist einen kegelstumpfartigen Abschnitt auf, dessen Außendurchmesser sich ausgehend vom kopfseitigen Ende verringert. Eine zweite Ringhülse wird in eine Durchgangsbohrung in einem Werkstück eingesetzt. Die zweite Ringhülse weist eine kegelstumpfförmige Innenbohrung auf, deren Innendurchmesser sich vom schraubenkopfseitigen Ende weg verringert. Die erste Ringhülse wird zusammen mit der Schraube in die zweite Ringhülse eingedrückt, bis nach außen vorragende Rastvorsprünge an den Enden der blattförmigen Federzungen nach außen und hinter die Unterseite der zweiten Ringhülse schnappen.

Aus der europäischen Offenlegungsschrift 2 136 088 A2 ist eine einteilige Verliersicherung bekannt, bei der eine Ringhülse auf den Schaft der Schraube aufgeschoben werden kann. Die Ringhülse kann dann in eine Durchgangsbohrung eines Werkstücks eingesetzt werden. Die Ringhülse weist blattförmige Federzungen auf, die sich nach innen, in Richtung auf den Schaft der Schraube zu erstrecken. Die blattförmigen Federzungen ermöglichen zum einen einen federnden Sitz der Ringhülse in der Durchgangsbohrung des Werkstücks und zum anderen verhindern die nach innen vorragenden Enden der blattförmigen Federzungen auch, dass die Schraube aus der Ringhülse herausrutscht. Die Ringhülse ist rohrartig ausgebildet und weist Ausstanzungen auf, mit deren Hilfe die Federzungen gebildet werden.

Aus der US-Offenlegungsschrift US 2014/0357137 A1 ist eine ringförmige Federhülse bekannt, die zum Herstellen einer elektrisch leitfähigen Verbindung zwischen einer Buchse und einem in die Buchse eingesteckten Stift vorgesehen ist. Die Ringhülse ist aus einem Materialstreifen gebogen und zwischen dem Beginn und dem Ende des Materialstreifens liegt in fertiggestelltem Zustand der ringförmigen Hülse ein Zwischenraum. Die Hülse bildet zwischen drei Ringabschnitten eine käfigartige Struktur mit mehreren, über den Umfang verteilten und in Längsrichtung verlaufenden Streben.

Aus der deutschen Patentschrift DE 955101 ist eine Sicherungsmutter mit sechskantförmiger Außenkontur und nach innen, in Richtung auf eine Mittellängsachse vorragenden federnden Sperrzähnen bekannt. Die Sperrzähne sind dafür vorgesehen, in ein Gewinde eines Gewindebolzens einzugreifen.

Mit der Erfindung sollen eine Verliersicherung für eine Schraube; eine Montageeinheit mit einer Schraube und einer Verliersicherung und ein Verfahren zum Montieren einer Schraube und einer Verliersicherung hinsichtlich eines einfachen Aufbaus und einer Toleranzunempfindlichkeit verbessert werden.

Erfindungsgemäß ist hierzu eine Verliersicherung für Schrauben mit den Merkmalen von Anspruch 1 vorgesehen. Es ist eine Verliersicherung mit einer ringförmigen Hülse zum Einsetzen in eine Durchgangsbohrung in einem Werkstück vorgesehen, bei der die ringförmige Hülse mit wenigstens einer blattförmigen Federzunge versehen ist, die sich ausgehend von der ringförmigen Hülse erstreckt und in Richtung auf eine Mittellängsachse der Hülse vorragt.

Überraschenderweise lässt sich durch einen konstruktiv sehr einfachen Aufbau einer Verliersicherung mit einer ringförmigen Hülse mit wenigstens einer blattförmigen Federzunge nicht nur ein einfacher, kostengünstiger Aufbau, sondern auch eine große Toleranzunempfindlichkeit erreichen. Denn eine Schraube wird mittels der blattförmigen Federzunge daran gehindert, sich in axialer Richtung aus einer Durchgangsbohrung herauszubewegen und gleichzeitig erlaubt die blattförmige Federzunge eine radiale Verschiebbarkeit der Schraube in der Durchgangsbohrung. Die Schraube wird also verliersicher in der Durchgangsbohrung gehalten und gleichzeitig kann die Schraube in radialer Richtung innerhalb der Durchgangsbohrung verschoben werden, um passend zu Gewindebohrungen in einem weiteren Werkstück ausgerichtet zu werden. Die erfindungsgemäße Verliersicherung ist insbesondere für die Befestigung von Hauben oder Deckeln äußerst vorteilhaft. Zum einen können Schrauben in Durchgangsbohrungen vormontiert werden und die Haube oder der Deckel mit den vormontierten Schrauben kann dann automatisiert zu einem weiteren Werkstück bewegt werden, beispielsweise einem Zylinderkopf, ohne dass befürchtet werden muss, dass die Schrauben aus den Durchgangsbohrungen herausfallen. Durch die erfindungsgemäße Verliersicherung können die Schrauben dann bei der Montage in radialer Richtung relativ zu den Durchgangsbohrungen verschoben werden, um Toleranzen auszugleichen. Dies ist speziell dann von großem Vorteil, wenn die Haube oder der Deckel mit zahlreichen Schrauben befestigt werden soll. Es ist mit vernünftigem Aufwand dann praktisch nicht auszuschließen, dass Toleranzen zwischen der Lage der Durchgangsbohrungen an der Haube und den Gewindebohrungen im Werkstück, beispielsweise im Zylinderkopf, auftreten. Solche Toleranzen können mittels der erfindungsgemäßen Verliersicherung problemlos kompensiert werden. Die Durchgangsbohrung kann beispielsweise in einer Hülse vorgesehen sein, die dann in eine Haube oder einen Deckel oder ein sonstiges Werkstück eingepresst oder eingespritzt wird. Die Verliersicherung bildet dann zusammen mit der Buchse und der Schraube eine Montageeinheit. In Weiterbildung der Erfindung weist die ringförmige Hülse einen von einem ersten Rand zu einem zweiten Rand durchgehenden Schlitz auf.

Die Hülse kann dadurch federnd ausgebildet sein und unter Vorspannung in eine Durchgangsbohrung eingebracht werden. Beispielsweise weist die Hülse im entspannten Zustand einen größeren Durchmesser auf als die Durchgangsbohrung und zum Montieren wird die Hülse zusammengedrückt und, nachdem sie in die Durchgangsbohrung eingebracht wurde, wieder losgelassen. Die Hülse federt dann auf und hält mittels Reibung ihre Position in der Durchgangsbohrung. Die Ausbildung der ringförmigen Hülse mit einem durchgehenden Schlitz, also als geschlitzte Hülse, erlaubt es auch, Toleranzen von Durchgangsbohrungen zu kompensieren.

In Weiterbildung der Erfindung weist die ringförmige Hülse einen Abschnitt auf, der einen geschlossenen Ring bildet.

Wenn die Verliersicherung in Blechbauteile mit nur geringer Dicke eingesetzt werden soll, kann mittels eines Abschnitts der Hülse, der als geschlossener Ring ausgebildet ist, eine ausreichend hohe Haltekraft in einer Durchgangsöffnung des Blechbauteils erreicht werden. Die Verliersicherung kann dann beispielsweise in die Durchgangsöffnung eingepresst werden. Ein Außendurchmesser der Verliersicherung kann dann geringfügig größer gewählt werden als ein Innendurchmesser der Durchgangsöffnung, um eine Presspassung zu erzielen. Der Innendurchmesser der Durchgangsöffnung und der Außendurchmesser der Verliersicherung können sich auch bezüglich ihrer Form unterscheiden, um eine ausreichende Klemmwirkung der Verliersicherung in der Durchgangsöffnung zu erzielen.

In Weiterbildung der Erfindung sind drei blattförmige Federzungen, insbesondere 3 bis 8 Federzungen gleichmäßig über den Umfang der ringförmigen Hülse verteilt.

Mittels dreier blattförmiger Federzungen kann eine Schraube sicher und gleichmäßig belastet gehalten werden. Vor allem ist es möglich, die Schraube mittels dreier Federzungen mittig zu der Durchgangsbohrung zu halten, also mit einem gleichmäßigen Abstand des Schafts der Schraube zur Wandung der Durchgangsbohrung. Die Federzungen können die Schraube dabei beispielsweise entweder dadurch halten, dass der Gewindeabschnitt der Schraube einen größeren Außendurchmesser aufweist als ein gewindeloser Abschnitt des Schafts der Schraube, oder die Federzungen greifen am Gewinde der Schraube an und sichern die Schraube dadurch in der Durchgangsbohrung. Bei flacheren Bauteilen, insbesondere Blechbauteilen, können mehr als drei Federzungen Vorteile haben.

Gemäß der Erfindung erstreckt sich die wenigstens eine blattförmige Federzunge ausgehend von der ringförmigen Hülse zunächst parallel zur Mittellängsachse der Hülse, dann schräg zur Mittellängsachse auf die Mittellängsachse zu und wenigstens bis kurz vor das freie Ende der blattförmigen Federzunge wieder parallel zur Mittellängsachse.

Auf diese Weise lässt sich eine Schraube problemlos in die Verliersicherung einführen, wenn die Verliersicherung beispielsweise bereits in einer Durchgangsbohrung montiert ist. Die Schraube wird mit ihrem Gewindeabschnitt voran in die ringförmige Hülse eingeschoben und drückt dann die blattförmigen Federzungen dadurch auseinander, dass sie auf den schräg zur Mittellängsachse verlaufenden Bereich der Federzungen aufläuft. Die Bereiche am Ende der blattförmigen Federzunge, die sich wieder parallel zur Mittellängsachse erstrecken, sorgen dann für eine gleichmäßige Beaufschlagung des Schraubenschafts durch die Federzungen. Diese parallel zur Mittellängsachse verlaufenden Bereiche der blattförmigen Federzungen erstrecken sich ausgehend von dem schräg verlaufenden Abschnitt wenigstens bis kurz vor das freie Ende der blattförmigen Federzunge.

Unmittelbar vor ihrem freien Ende können sich die blattförmigen Federzungen wieder schräg zur Mittellängsachse von dieser weg erstrecken. Dadurch kann beispielsweise eine V-förmige Gestaltung des Endes der blattförmigen Federzungen erreicht werden, mit der dann in die Gewindegänge der Schraube eingegriffen werden kann.

In Weiterbildung der Erfindung sind die ringförmige Hülse und die wenigstens eine Federzunge aus einem Edelstahlblech geformt.

Auf diese Weise kann die Verliersicherung zum einen federelastisch und zum anderen auch korrosionsfest ausgebildet werden.

In Weiterbildung der Erfindung erstreckt sich die wenigstens eine Federzunge ausgehend von einem ersten Rand der Hülse und die Hülse ist im Bereich eines zweiten Rands, der dem ersten Rand gegenüberliegt, mit wenigstens einem radial nach außen, von der Mittellängsachse weg, vorragenden Vorsprung versehen.

Mittels eines solchen Vorsprungs oder mittels mehrerer solcher Vorsprünge kann die Hülse in einer Durchgangsbohrung sicher verankert werden. Die Vorsprünge sind dabei vorteilhafterweise in Form von schräg radial nach außen abgebogenen Blechabschnitten realisiert. Diese Blechabschnitte liegen dann federnd an der Innenwandung der Durchgangsbohrung an und sichern dadurch die Hülse in der Durchgangsbohrung.

In Weiterbildung der Erfindung ist die ringförmige Hülse aus einem bandförmigen Materialstreifen gebogen.

Beispielsweise kann die Hülse aus einem gestanzten und vorgebogenen Blechstreifen hergestellt werden und je nach dem Durchmesser der benötigten Hülse wird ein Stück passender Länge von dem Blechstreifen abgelängt. Das Biegen des Blechstreifens erfolgt dann dahingehend, dass die Federzungen bereits ihre vorgesehene Form erhalten und gegebenenfalls Vorsprünge an der Hülse ausgebogen werden, die dann für einen sicheren Halt der Hülse in der Durchgangsbohrung sorgen. Der Blechstreifenabschnitt wird dann zu der runden Hülse gebogen und in dem gebogenen Zustand dann in eine Durchgangsbohrung eingesetzt.

In Weiterbildung der Erfindung liegt zwischen dem Beginn und dem Ende des Blechstreifens im fertiggestellten Zustand der ringförmigen Hülse ein Zwischenraum.

Auf diese Weise wird eine geschlitzte Hülse realisiert, die zum einen eine Federwirkung entfalten kann, so dass sie zuverlässig in einer Durchgangsbohrung montiert und gesichert werden kann. Zum anderen können mit einer solchen geschlitzten Hülse Toleranzen im Durchmesser der Durchgangsbohrung ausgeglichen werden.

In Weiterbildung der Erfindung weist die Hülse einen Abschnitt auf, der einen geschlossenen Ring bildet, wobei in Richtung einer Mittellängsachse des Rings gesehen die wenigstens eine Federzunge von dem, den geschlossenen Ring bildenden Abschnitt ausgeht und wobei eine Längserstreckung der Federzunge das Einfache bis Dreifache der Länge des den geschlossenen Ring bildenden Abschnitts beträgt.

Bei solchen, vergleichsweise kurzen Federzungen ist die Federwirkung geringer, dies kann aber beispielsweise durch mehr als drei Federzungen ausgeglichen werden. Dadurch kann auch mit solchen flachen Verliersicherungen, die beispielsweise zum Einsetzen in Blechbauteile vorgesehen sind, eine hohe Zuverlässigkeit erzielt werden.

In Weiterbildung der Erfindung sind zwei in Umfangsrichtung nebeneinander angeordnete Federzungen mittels eines Einschnitts in die Hülse voneinander getrennt.

Auf diese Weise lassen sich die Federzungen in sehr einfacher Weise ausbilden. Der Einschnitt kann mechanisch eingebracht werden, beispielsweise durch Sägen oder Stanzen, oder auch durch Urformen, beispielsweise wenn die Hülse mit den Federzungen als Kunststoffspritzgussteil hergestellt wird.

Das der Erfindung zugrunde liegende Problem wird auch durch eine Montageeinheit mit einer Schraube, einer Buchse und einer erfindungsgemäßen Verliersicherung gelöst, wobei die Verliersicherung in die Buchse eingesetzt ist und sich die Schraube wenigstens abschnittsweise in die Buchse hineinerstreckt und von der Verliersicherung in der Buchse gehalten ist.

Eine solche Montageeinheit mit Buchse, Verliersicherung und Schraube kann zugeliefert werden und beispielsweise automatisiert in zu der Buchse passende Durchgangsbohrungen einer Haube oder eines Deckels eingesetzt werden. Selbstverständlich ist es auch möglich, die Montageeinheit bei der Herstellung der Haube oder des Deckels oder eines sonstigen Werkstücks mit einzuspritzen. Nach dem Befestigen der Buchse an der Haube, dem Deckel oder dem sonstigen Werkstück ist die Schraube dann unverlierbar an der Haube, dem Deckel oder dem sonstigen Werkstück gehalten.

Das der Erfindung zugrunde liegende Problem wird auch durch eine Montageeinheit mit einer Schraube, einem Blechbauteil und einer erfindungsgemäßen Verliersicherung gelöst, wobei die Verliersicherung und die Schraube in eine Durchgangsöffnung des Blechbauteils eingesetzt sind.

Gerade bei vergleichsweise dünnen Blechteilen, beispielsweise mit einer Dicke zwischen 3 mm und 5 mm, oder auch bei dünnen Kunststoffbauteilen kann die erfindungsgemäße Verliersicherung in sehr vorteilhafter Weise eingesetzt werden.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen dargestellte und/oder in der Beschreibung beschriebene Einzelmerkmale können dabei miteinander kombiniert werden, ohne den Rahmen der Erfindung zu überschreiten, solange diese Kombinationen unter den Wortlaut der beigefügten Ansprüche fallen. In den Zeichnungen zeigen:
- Fig. 1: eine Seitenansicht einer nicht erfindungsgemäßen Verliersicherung,
- Fig. 2: eine auseinandergezogene Darstellung einer nicht erfindungsgemäßen Montageeinheit mit der Verliersicherung der Fig. 1,
- Fig. 3: eine Darstellung zur Erläuterung der Herstellung der Montageeinheit der Fig. 2,
- Fig. 4: eine abschnittsweise Schnittansicht eines ersten Werkstücks mit zwei nicht erfindungsgemäßen Montageeinheiten und eines zweiten Werkstücks mit zwei Gewindebohrungen,
- Fig. 5: eine Ansicht einer nicht erfindungsgemäßen Verliersicherung gemäß einer weiteren Ausführungsform von schräg unten,
- Fig. 6: eine Draufsicht der Verliersicherung der Fig. 5,
- Fig. 7: eine Ansicht auf die Schnittebene A-A in Fig. 6,
- Fig. 8: eine schematische Darstellung der Schritte beim Einsetzen der Verliersicherung der Fig. 5 und einer Schraube in Durchgangsöffnungen eines Blechbauteils,
- Fig. 9: eine Ansicht einer nicht erfindungsgemäßen Verliersicherung gemäß einer weiteren Ausführungsform von schräg oben,
- Fig. 10: eine Draufsicht auf die Verliersicherung der Fig. 9,
- Fig. 11: eine Ansicht der Schnittebene A-A in Fig. 10,
- Fig. 12: eine Darstellung der Einzelheit B aus Fig. 11,
- Fig. 13: eine Ansicht einer nicht erfindungsgemäßen Verliersicherung gemäß einer weiteren Ausführungsform von schräg unten
- Fig. 14: die Verliersicherung der Fig. 13 in einer Draufsicht,
- Fig. 15: eine Ansicht auf die Schnittebene A-A in Fig. 14 und
- Fig. 16: die vergrößerte Einzelheit B aus Fig. 15,
- Fig. 17: eine Verliersicherung gemäß einer Ausführungsform der Erfindung von schräg oben,
- Fig. 18: die Verliersicherung der Fig. 17 in einer Seitenansicht,
- Fig. 19: die Verliersicherung der Fig. 17 in einer Draufsicht,
- Fig. 20: die Verliersicherung der Fig. 17 im eingebauten Zustand als Montageeinheit mit einer Schraube in einer ersten Position,
- Fig. 21: die Verliersicherung der Fig. 17 im eingebauten Zustand als Montageeinheit mit einer Schraube in einer zweiten Position und
- Fig. 22: die Verliersicherung der Fig. 17 im eingebauten Zustand als Montageeinheit mit einer Schraube in einer dritten Position.

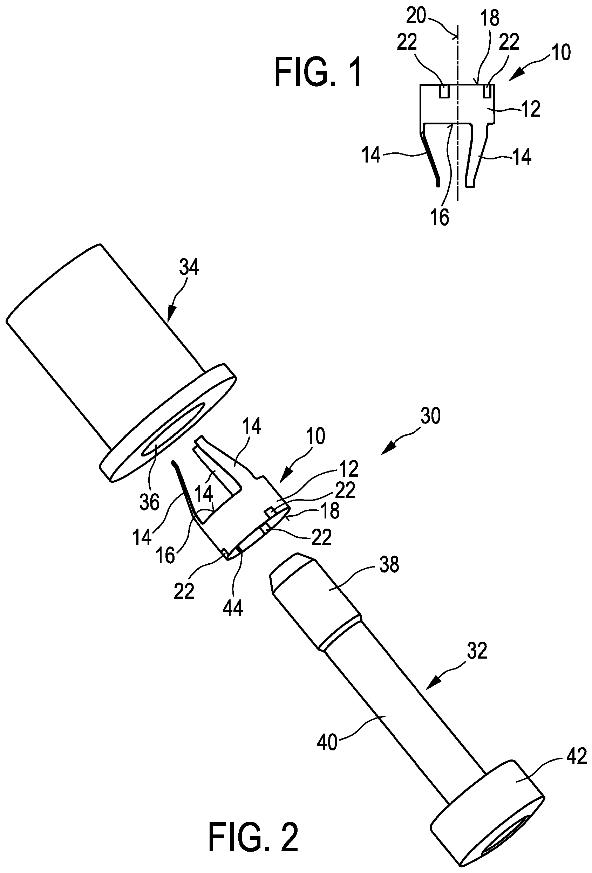

Die Darstellung der Fig. 1 zeigt eine Verliersicherung 10. Die Verliersicherung 10 weist eine ringförmige Hülse 12 auf, die mit insgesamt drei blattförmigen Federzungen 14 versehen ist, wobei in der Seitenansicht der Fig. 1 lediglich zwei der Federzungen 14 zu erkennen sind. Die ringförmige Hülse 12 weist einen ersten Rand 16 und einen zweiten Rand 18 auf, der dem ersten Rand 16 gegenüberliegt. Die beiden Ränder 16, 18 verlaufen parallel zueinander. Die blattförmigen Federzungen 14 erstrecken sich ausgehend vom ersten Rand 16. Eine Mittellängsachse 20 der ringförmigen Hülse 12 ist in Fig. 1 mittels einer strichpunktierten Linie angedeutet.

Die blattförmigen Federzungen erstrecken sich, wie am besten anhand der in Fig. 1 links dargestellten Federzunge 14 zu erkennen ist, ausgehend vom ersten Rand 16 zunächst parallel zur Mittellängsachse 20, um dann schräg zur Mittellängsachse 20 auf die Mittellängsachse 20 zu zu verlaufen. Anschließend an den schräg verlaufenden Abschnitt schließt sich wieder ein parallel zur Mittellängsachse verlaufender Abschnitt der Federzunge 14 an, der dann bis zum freien Ende der blattförmigen Federzunge 14 reicht.

Im Bereich des zweiten Rands 18 sind drei radial nach außen vorragende Vorsprünge 22 vorgesehen, wobei in der Darstellung der Fig. 1 lediglich zwei dieser Vorsprünge erkennbar sind. Die Vorsprünge 22 sind mittels radial schräg nach außen abgebogener Blechlappen realisiert.

Die Verliersicherung 10 ist dafür vorgesehen, in eine Durchgangsbohrung eingesetzt zu werden. Die Vorsprünge 22 liegen im montierten Zustand an einer Innenwand der Durchgangsbohrung an und sorgen für einen sicheren Halt der Verliersicherung 10 in der Durchgangsbohrung.

Die blattförmigen Federzungen 14 sind dafür vorgesehen, mit ihrem Endabschnitt am freien Ende am Schaft einer Schraube anzuliegen und die Schraube dadurch zu sichern.

Fig. 2 zeigt eine auseinandergezogene Darstellung einer erfindungsgemäßen Montageeinheit 30 mit der Verliersicherung 10 aus Fig. 1. Die Montageeinheit 30 weist eine Schraube 32, eine Verliersicherung 10 und eine Buchse 34 auf. Die Verliersicherung 10 ist dafür vorgesehen, in eine zylindrische Durchgangsbohrung 36 der Buchse 34 eingesetzt zu werden. Die Schraube 32 wird dann mit einem Gewindeabschnitt 38 voran in die Durchgangsbohrung 36 und damit in die Verliersicherung 10 eingeschoben. Im montierten Zustand verhindern die Federzungen 14 der Verliersicherung 10, die dann am Schaft der Schraube 32 anliegen, dass die Schraube 32 wieder aus der Buchse 34 herausfällt. Die freien Enden der Federzungen 14 können dabei an einem gewindelosen Abschnitt 40 des Schraubenschafts der Schraube 32 anliegen, der sich zwischen dem Gewinde 38 und einem Schraubenkopf 42 erstreckt. In einer Richtung auf die Buchse 34 zu kann die Schraube 32 aufgrund des Schraubenkopfs 42 nicht aus der Buchse herausfallen. In der Gegenrichtung stoßen die freien Enden der Federzungen 14 am Beginn des Gewindeabschnitts 38 an und verhindern dadurch, dass die Schraube aus der Durchgangsbohrung 36 der Buchse 34 herausfällt. Die freien Enden der Federzungen 14 können aber auch auf dem Gewinde 38 aufliegen. Auch dadurch wird die Schraube 32 mittels der Federzungen 14 in der Durchgangsbohrung 36 der Buchse 34 gehalten.

In Fig. 2 ist zu erkennen, dass die Hülse 12 als geschlitzte Hülse ausgeführt ist und einen Schlitz 44 aufweist, der sich vom ersten Rand 16 der Hülse 12 bis zum zweiten Rand 18 der Hülse 12 erstreckt. Der Schlitz 44 sorgt dafür, dass die ringförmige Hülse 12 in gewissem Maß auffedern und einfedern kann. Dadurch können zum einen Toleranzen des Innendurchmessers der Durchgangsbohrung 36 kompensiert werden und die Hülse 12 kann auch zum Einsetzen in die Durchgangsbohrung 36 zusammengedrückt werden. Nach dem Auffedern liegt die Hülse 12 dann mit ihrem Außenumfang und auch mit den Vorsprüngen 22 unter Federvorspannung an der Innenwand der Durchgangsbohrung 36 an. Die Verliersicherung 10 kann dadurch in der Durchgangsbohrung 36 der Buchse 34 gesichert werden.

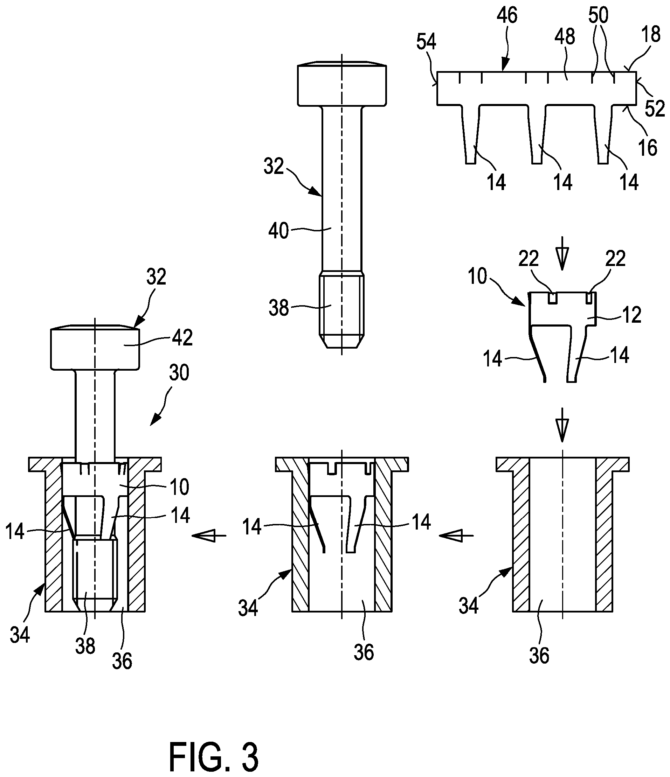

Die Darstellung der Fig. 3 zeigt die Herstellung der Montageeinheit 30 der Fig. 2 in verschiedenen Arbeitsschritten. Zunächst wird aus einem vorgestanzten und vorgebogenen Blechstreifen die Verliersicherung 10 geformt. Dies geschieht dadurch, dass von einem längeren Blechstreifen ein Abschnitt 46 abgetrennt wird, der drei Federzungen 14 und einen Streifen 48 aufweist, der dann später zu der ringförmigen Hülse 12 der Verliersicherung 10 geformt wird. Die Federzungen 14 erstrecken sich ausgehend von einem ersten Rand 16 des Streifens 48 und der zweite Rand 18 des Streifens 48 ist mit insgesamt sechs Einschnitten 50 versehen, wobei zwei Einschnitte 50 zwischen sich im fertiggestellten Zustand der Verliersicherung 10 dann jeweils einen Vorsprung 22 definieren. Der Abschnitt 46 wird dann so vorgebogen, dass die Federzungen 14 bereits ihre spätere Form erhalten, speziell einen ersten, parallel zum Streifen 48 verlaufenden Abschnitt, dann einen schräg zum Streifen 48 verlaufenden Abschnitt und dann wieder einen parallel zum Streifen 48 verlaufenden Abschnitt bis zum freien Ende der Federzungen 14. Die Bereiche zwischen den Einschnitten 50 werden schräg zum Streifen 48 abgebogen, so dass sich die Vorsprünge 22 im fertiggestellten Zustand der Verliersicherung 10 dann radial schräg nach außen erstrecken.

Der Streifen 48 wird dann kreisförmig gebogen, so dass die Verliersicherung 10 entsteht. Zwischen den beiden Enden 52, 54 des Streifens 48 des Abschnitts 46 liegt dann noch ein kleiner Abstand, der, vgl. Fig. 2, dann den Schlitz 44 in der Hülse 12 der Verliersicherung 10 bildet.

Nachfolgend wird die Verliersicherung 10 dann in die Durchgangsbohrung 36 der Buchse 34 eingesetzt, wobei die Buchse 34 geschnitten dargestellt ist. Es wurde bereits ausgeführt, dass die ringförmige Hülse 12 hierzu etwas zusammengedrückt und damit im Außendurchmesser verringert wird. Nach dem Einführen in die Durchgangsbohrung 36 federt die ringförmige Hülse 12 dann auf, so dass die Verliersicherung 10 sicher in der Durchgangsbohrung 36 gehalten ist.

Nachfolgend wird die Schraube 32 mit dem Gewindeabschnitt 38 voran in die Durchgangsbohrung 36 der Buchse 34 eingeführt. Beim Einschieben der Schraube 32 drückt das vordere Ende der Schraube die Federzungen 14 radial nach außen, so dass die freien Enden der Federzungen 14 über den Gewindeabschnitt 38 hinweggleiten und dann nach dem Ende des Gewindeabschnitts 38 wieder nach innen federn und dann am gewindelosen Abschnitt 40 des Schafts der Schraube 32 anliegen.

Die fertiggestellte Montageeinheit 30 ist in Fig. 3 ganz links zu erkennen. Man sieht, dass die Federzungen 14 der Verliersicherung 10 nun ein Herausfallen der Schraube 32 aus der Buchse 34 dadurch verhindern, dass die freien Enden der Federzungen 14 an dem kopfseitigen Beginn des Gewindeabschnitts 38 der Schraube 32 anschlagen. Die Schraube 32 kann also, in Fig. 3 nach oben, nicht aus der Durchgangsbohrung 36 der Gewindebuchse 34 herausrutschen. In der Gegenrichtung, in Fig. 3 also nach unten, verhindert der Kopf 42 der Schraube, dass diese durch die Buchse 34 hindurchfällt.

Die Montageeinheit 30 weist somit die Schraube 32, die Verliersicherung 10 und die Buchse 34 auf, wobei die Schraube 32 unverlierbar mittels der Verliersicherung 10 in der Buchse 34 gehalten ist.

Man kann bereits an der fertiggestellten Montageeinheit 30, die ganz links in Fig. 3 teilweise geschnitten dargestellt ist, erkennen, dass der Schaft der Schraube und damit auch der Gewindeabschnitt 38 der Schraube 32 in radialer Richtung innerhalb der Durchgangsbohrung 36 bewegt werden können. Dadurch können Toleranzen der Position eines Gegengewindes in einem Werkstück ausgeglichen werden.

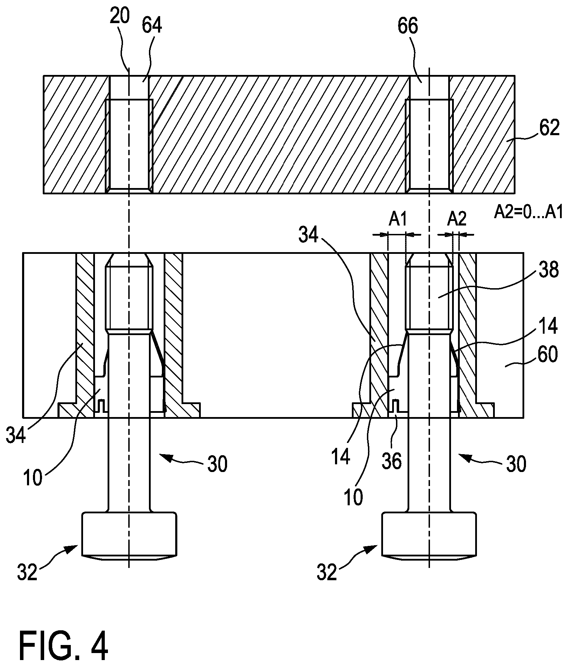

Fig. 4 zeigt eine Darstellung mit einem ersten Werkstück 60, in das zwei nicht erfindungsgemäße Montageeinheiten 30 eingesetzt sind. Das erste Werkstück 60 weist hierzu zwei abgestufte Durchgangsbohrungen auf, in die die jeweiligen Buchsen 34 so eingesetzt werden, dass ein dem Schraubenkopf der Schraube 32 der Montageeinheiten 30 zugewandtes Ende der Buchsen 34 bündig zu einer Oberfläche des ersten Werkstücks 60 angeordnet ist. Ein gegenüberliegendes Ende der Buchsen 34 ist ebenfalls bündig zu der zugeordneten Oberfläche des Werkstücks 60 angeordnet.

Ein zweites Werkstück 62 ist mit zwei Gewindebohrungen 64, 66 versehen. Das erste Werkstück 60 ist beispielsweise als Deckel oder Haube ausgebildet und das zweite Werkstück 62 beispielsweise als Zylinderkopf. Es ist der Darstellung der Fig. 4 zu entnehmen, dass die in Fig. 4 linke Montageeinheit nun relativ zu der linken Gewindebohrung 64 des zweiten Werkstücks 62 so ausgerichtet ist, dass eine Mittellängsachse 20 der Verliersicherung 10, eine Mittellängsachse der Schraube 32, eine Mittellängsachse der Buchse 34 und eine Mittellängsachse der ersten Gewindebohrung 64 im zweiten Werkstück 62 zusammenfallen.

Ein seitlicher Abstand zwischen der ersten Gewindebohrung 64 und der zweiten Gewindebohrung 66 im zweiten Werkstück 62 entspricht aber nicht exakt dem Abstand der Mittellängsachsen der linken Buchse 34 und der rechten Buchse 34 im ersten Werkstück 60.

Speziell ist ein Abstand der Mittellängsachsen der beiden Buchsen 34 im ersten Werkstück 60 kleiner als ein Abstand der Mittellängsachsen der beiden Gewindebohrungen 64, 66 im zweiten Werkstück 62.

Da die Schraube 32 in der rechten Buchse 34 aber mittels der Federzungen 14 der Verliersicherung 10 gehalten ist, kann die Schraube 32 in der Darstellung der Fig. 4 nach rechts innerhalb der Durchgangsbohrung 36 der Buchse 34 verschoben werden, bis die Mittellängsachse der Schraube 32 mit der Mittellängsachse der zweiten Gewindebohrung 66 des zweiten Werkstücks 62 fluchtet. Diese seitliche Verschiebung des Schraubenschafts der Schraube 32 innerhalb der Durchgangsbohrung 36 der rechten Buchse 34 ist in Fig. 4 einfach dadurch zu erkennen, dass der Gewindeabschnitt 38 der Schraube 32 zur rechten Begrenzung der Durchgangsbohrung 36 der Buchse 34 einen Abstand A2 hat und zur linken Begrenzung der Durchgangsbohrung 36 der Buchse 34 einen Abstand A1 hat, wobei A1 größer ist als A2. Da nun die Mittellängsachsen der rechten Schraube 32 und der zweiten Gewindebohrung 66 fluchten, kann die Schraube 32 problemlos mit ihrem Gewindeabschnitt 38 in die zweite Gewindebohrung 66 eingeschraubt werden. Gleichzeitig kann auch die in Fig. 4 linke Schraube 32 problemlos in die erste Gewindebohrung 64 eingeschraubt werden, da ja die Mittellängsachsen der linken Schraube 32 und der ersten Gewindebohrung 64 ebenfalls fluchten.

Die nicht erfindungsgemäße Verliersicherung 10 und die nicht erfindungsgemäßen Montageeinheiten 30 ermöglichen es also, die Schrauben 32 verliersicher in dem ersten Werkstück 60 anzuordnen und gleichzeitig Toleranzen zwischen den Gewindebohrungen 64, 66 im zweiten Werkstück 62 und den Mittellängsachsen der beiden Buchsen 34 im ersten Werkstück 60 zu kompensieren.

Die nicht erfindungsgemäßen Verliersicherungen 10 sind darüber hinaus kostengünstig herstellbar, leicht montierbar und sorgen auch für eine zuverlässige Sicherung der Schrauben 32 in den Buchsen 34.

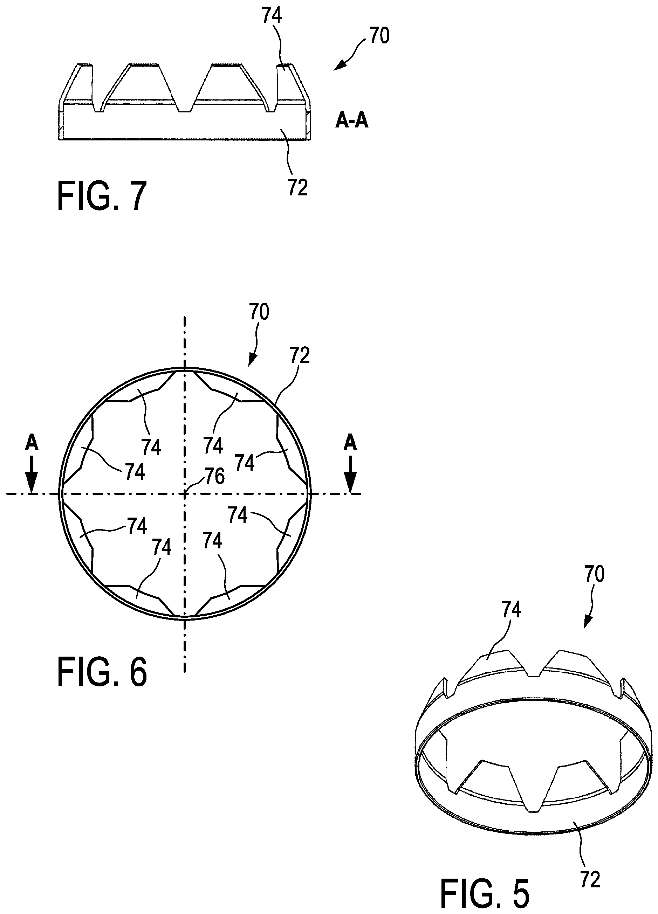

Fig. 5 zeigt eine nicht erfindungsgemäße Verliersicherung 70, die einen ersten Abschnitt 72 in Form eines geschlossenen Rings aufweist, von dem ausgehend sich mehrere Federzungen 74 erstrecken. Die Federzungen 74 sind jeweils durch V-förmige Einschnitte voneinander getrennt und in Umfangsrichtung der Verliersicherung 70 gleichmäßig voneinander beabstandet angeordnet. Der einen geschlossenen Ring bildende Abschnitt 72 ist zylindrisch ausgebildet. Die Federzungen 74 sind dann jeweils schräg nach innen, auf die Mittellängsachse des Abschnitts 72 zu abgebogen. Die Federzungen 74 sind jeweils annähernd eben ausgebildet und werden infolgedessen durch einfaches Abbiegen eines Materialabschnitts gebildet.

Die Federzungen 74 weisen jeweils eine prismenartige Form mit zwei schräg aufeinander zulaufenden Seitenkanten und einer in Umfangsrichtung verlaufenden Oberkante auf. Insgesamt sind acht Federzungen 74 gleichmäßig beabstandet nebeneinander in Umfangsrichtung angeordnet.

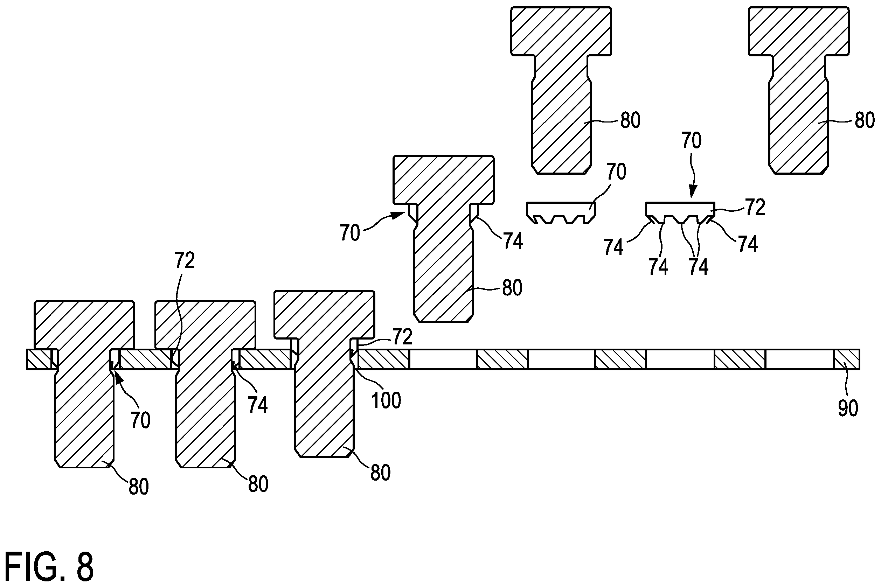

Die Verliersicherung 70 ist zum Einsetzen in Blechbauteile mit lediglich geringer Dicke vorgesehen, vgl. Fig. 8. Durch den Abschnitt 72, der einen geschlossenen Ring bildet, lassen sich hohe Klemmkräfte erzielen. Beispielsweise wird der Abschnitt 72 in eine Durchgangsbohrung eines Blechbauteils eingepresst, deren Innendurchmesser geringfügig kleiner ist als der Außendurchmesser des Abschnitts 72. Alternativ kann der Abschnitt 72 auch eine unrunde Form haben, um dann eine ausreichend große Klemmwirkung in einer runden Durchgangsöffnung eines Blechbauteils zu erzielen.

Fig. 6 zeigt die Verliersicherung 70 der Fig. 5 in einer Draufsicht. Zu erkennen ist die kreisrunde Ausgestaltung des Abschnitts 72 in Form eines zylindrischen Rohrs und die nach innen, zu einer Mittellängsachse 76 des Abschnitts 72 hin abgebogenen Federzungen 74.

Fig. 7 zeigt eine Ansicht auf die Schnittebene A-A der Verliersicherung 70 der Fig. 6.

In der Ansicht der Fig. 7 ist gut zu erkennen, dass in Längsrichtung der Mittellängsachse 76 gesehen die Federzungen 74 etwa doppelt so lang sind wie der Abschnitt 72. Auf diese Weise lässt sich noch eine ausreichende Federwirkung der Federzungen 74 und eine ausreichende Klemmwirkung des Abschnitts 72 bei gleichzeitig geringer Gesamthöhe der Verliersicherung 70 erzielen.

Fig. 8 zeigt verschiedene Schritte zur Bildung einer Montageeinheit aus der Verliersicherung 70, einer Schraube 80 und einem Blechbauteil 90 mit mehreren Durchgangsöffnungen.

Die Verliersicherung 70 wird zunächst auf die Schraube 80 aufgeschoben, bis sie an der Unterseite eines Kopfs der Schraube 80 anliegt. In diesem Abschnitt anschließend an die Unterseite des Kopfs ist der Schaft der Schraube 80 nicht mit einem Gewinde versehen, so dass der Außendurchmesser des Schafts in diesem Bereich kleiner ist als in dem Bereich, der mit einem Gewinde versehen ist. Die Federzungen 74 liegen mit ihren freien Enden an der Außenseite des Schafts an. Die Federzungen 74 verhindern dadurch, dass die Verliersicherung 70 wieder in Fig. 8 nach unten, über den Gewindeabschnitt der Schraube 80 herunterrutscht.

Die Schraube 80 mit der Verliersicherung 70 wird dann in eine Durchgangsöffnung 100 mit dem Gewindeabschnitt voraus eingeschoben. Die Durchgangsöffnung weist dabei einen Durchmesser auf, der größer ist als der Außendurchmesser des mit einem Gewinde versehenen Bereichs der Schraube 80. Sobald der Abschnitt 72 der Verliersicherung 70 an die obere Begrenzung der Durchgangsöffnung 100 gelangt, wird die Bewegung der Schraube 80 zunächst gestoppt. Die Schraube 80 kann dann weiter verschoben werden, indem eine Presskraft aufgebracht wird, mit der der Abschnitt 72 in die Durchgangsöffnung 100 eingepresst wird. Es wurde bereits ausgeführt, dass der Außendurchmesser des Abschnitts 72 der Verliersicherung 70 geringfügig größer ist als der Innendurchmesser der Durchgangsöffnung 100. Beim Einpressen der Verliersicherung 70 in die Durchgangsöffnung 100 entsteht dadurch eine Presspassung.

In Fig. 8 ist in den beiden Darstellungen am linken Ende des Blechbauteils 90 der vollständig in das Blechbauteil 90 eingepresste Zustand der Verliersicherungen 70 gezeigt. Die Enden der Federzungen 74 liegen etwa auf Höhe der Unterseite des Blechbauteils 90 und die den Federzungen 74 gegenüberliegende Umfangskante des Abschnitts 72 ist bündig mit der Oberseite des Blechbauteils 90 angeordnet. Die Verliersicherung 70 verhindert, dass die Schraube 80 aus der Durchgangsöffnung 100 des Blechbauteils 90 herausfallen kann. Die Schraube 80 kann aber dennoch problemlos in der Durchgangsöffnung 100 gedreht werden, beispielsweise um das Blechbauteil 90 an einem weiteren Bauteil mit einer Gewindebuchse befestigen zu können.

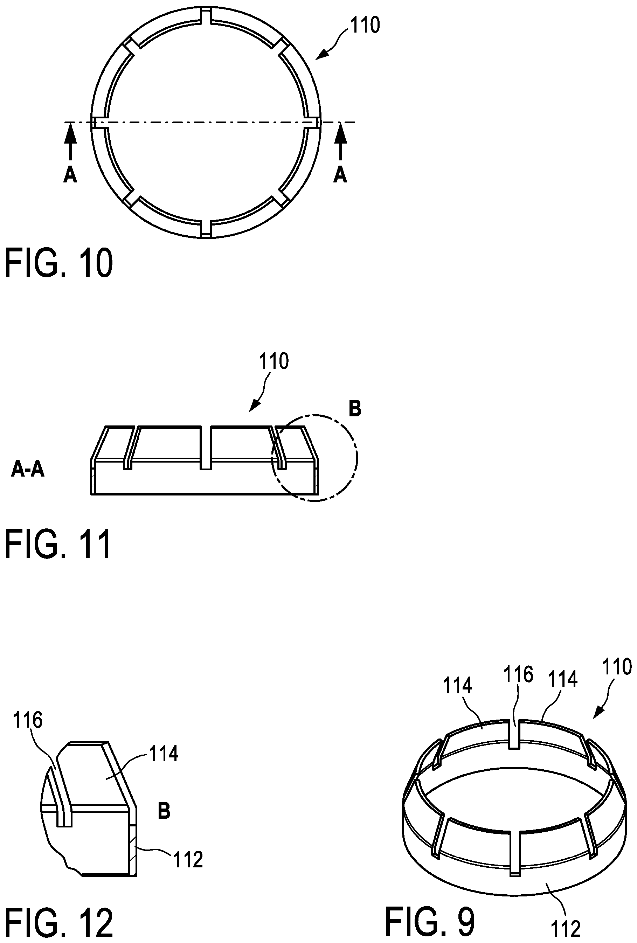

Die in Fig. 8 ganz links dargestellte Schraube 80 ist gegenüber einer konzentrisch zur Durchgangsöffnung 100 angeordneten Position leicht nach links verschoben. Eine solche radiale Verschiebung relativ zur Durchgangsöffnung 100 ist durch die nicht erfindungsgemäße Verliersicherung 70 möglich, da die Federzungen 74 in radialer Richtung nachgeben können. Durch die Verliersicherung 70 ist dadurch ein Toleranzausgleich möglich. Die Darstellung der Fig. 9 zeigt eine weitere nicht erfindungsgemäße Verliersicherung 110. Die Verliersicherung 110 weist einen Abschnitt 112 auf, der einen geschlossenen Ring bildet. Ausgehend von dem Abschnitt 112 sind insgesamt acht Federzungen 114 vorgesehen, die in Umfangsrichtung der Verliersicherung 110 gleichmäßig voneinander beabstandet sind. Die Federzungen 114 sind jeweils durch rechteckige Einschnitte 116 voneinander getrennt und in Richtung auf eine Mittellängsachse des Abschnitts 112 nach innen abgebogen. Die Federzungen 114 können beispielsweise durch einfaches Einsägen eines Rohrabschnitts gebildet werden.

Die Einschnitte 116 erstrecken sich dabei über den abgebogenen Teil der Federzungen 114 hinaus, siehe auch Fig. 12.

Fig. 10 zeigt eine Ansicht der Verliersicherung 110 von oben, Fig. 11 eine Ansicht der Schnittebene A-A in Fig. 10 und Fig. 12 die vergrößerte Einzelheit B aus Fig. 11.

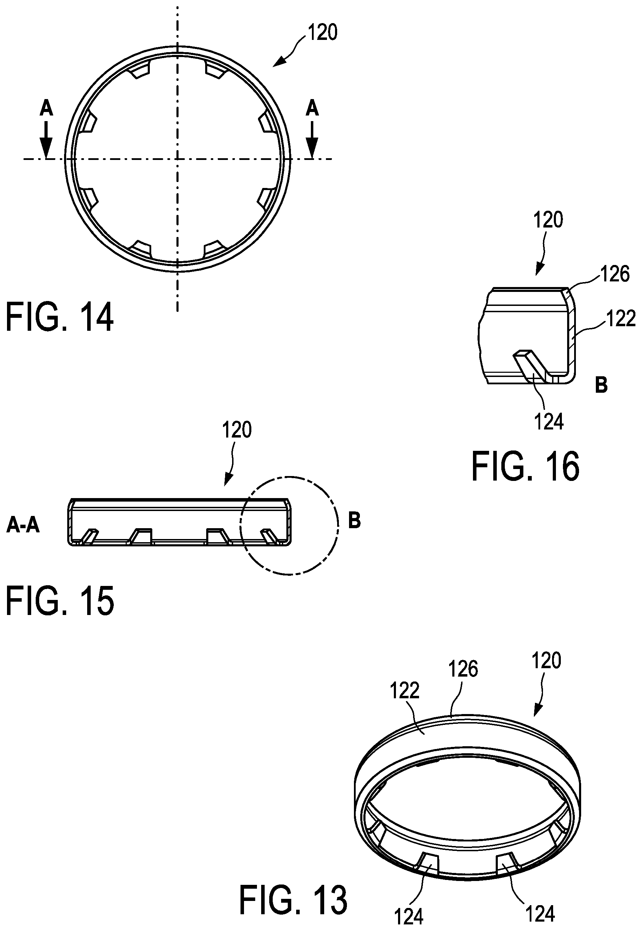

Fig. 13 zeigt eine weitere Verliersicherung 120. Die Verliersicherung 120 weist einen Abschnitt 122 auf, der einen geschlossenen Ring bildet. An einer in Fig. 13 unten liegenden Kante des Abschnitts 122 sind insgesamt acht Federzungen 124 vorgesehen, die nach innen, in Richtung auf eine Mittellängsachse des Abschnitts 122 abgebogen sind.

Allerdings sind die Federzungen 124 bei der Verliersicherung 120 um mehr als 90° abgebogen, so dass sie sich, siehe Fig. 13, wieder nach oben erstrecken. Eine Schraube würde in die Verliersicherung 120 der Fig. 13 also von unten nach oben eingeführt.

Um das Einführen bzw. Einpressen der Verliersicherung 120 in eine Durchgangsöffnung eines Blechbauteils zu erleichtern, ist ein Rand des Abschnitts 122, der den Federzungen 124 gegenüberliegt, nach innen abgebogen, siehe auch Fig. 16. Der Rand 126 des Abschnitts 122 dient dadurch als Einführhilfe beim Einführen oder Einpressen der Verliersicherung 124.

Fig. 14 zeigt eine Draufsicht auf die Verliersicherung 120, Fig. 15 eine Ansicht auf die Schnittebene A-A der Fig. 14 und Fig. 16 die vergrößerte Einzelheit B aus Fig. 15.

Die erfindungsgemäßen Verliersicherungen können entweder aus Blechstreifen, allgemein Materialstreifen, alternativ aus Rohren, Ronden oder auch als Spritzgussteile hergestellt werden. Die Blechstreifen, Rohre oder Ronden können beispielsweise aus Federstahl, Aluminium oder auch Kohlenstoffstahl hergestellt werden. Weitere Werkstoffe wie Metalle, Nichteisenmetalle, Kunststoffe und Hybridwerkstoffe können bei der Herstellung der erfindungsgemäßen Verliersicherung verwendet werden. Insbesondere Kunststoffe können beschichtet werden, um mehr Grip und Haftfestigkeit, insbesondere zwischen Verliersicherung und einer Werkstückbohrung oder Buchse, in die die Verliersicherung eingesetzt wird, zu erzielen. Je nach Umgebungsanforderung, insbesondere mechanische Anforderungen, korrosive Umgebungstemperatur, kann so eine optimale Anpassung der Verliersicherung erzielt werden.

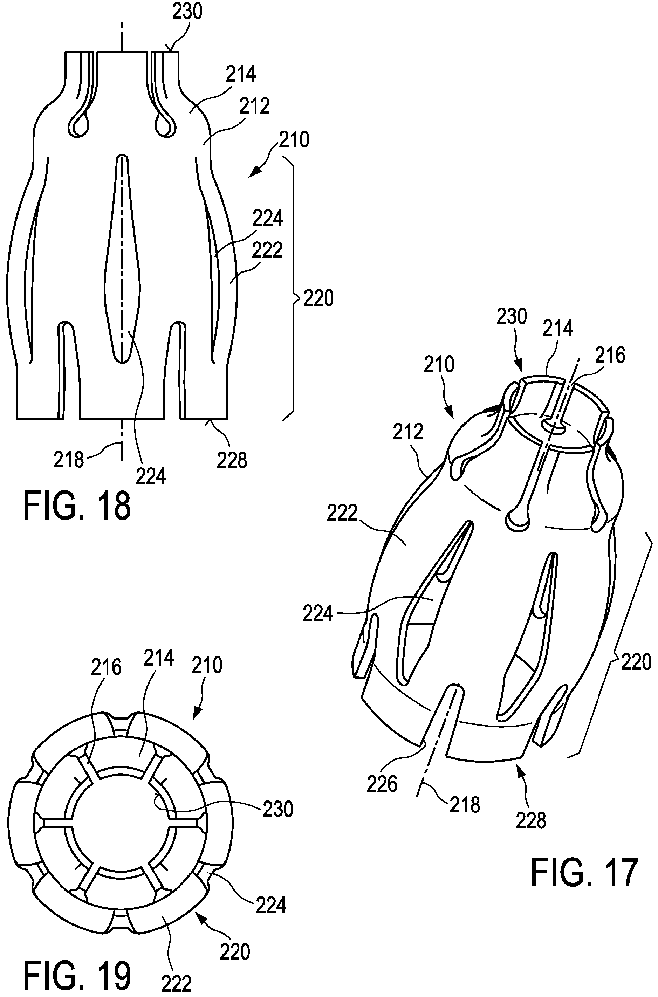

Fig. 17 zeigt eine erfindungsgemäße Verliersicherung 210 in einer Ansicht von schräg oben. Die Verliersicherung 210 ist als ringförmige Buchse ausgebildet und weist einen Abschnitt 212 auf, der als geschlossener Ring ausgebildet ist. Von diesem Abschnitt 212 aus verringert sich der Durchmesser der Buchse zu einem in Fig. 17 rechts oben dargestellten Ende 230 mit kleinerem Durchmesser der Buchse. Dieser verringerte Durchmesser wird durch insgesamt sechs Federzungen 214 erreicht, die von dem Abschnitt 212 ausgehen und durch Einschnitte 216 voneinander getrennt sind. Die Einschnitte 216 gehen von dem in Fig. 17 rechts oben dargestellten Ende 230 der Verliersicherung 210 aus, erstrecken bis zu dem ringförmigen Abschnitt 212 und weisen ein kreisabschnittförmiges Ende auf. Die Federzungen 214 verlaufen ausgehend vom Abschnitt 212 zunächst parallel zu einer Mittellängsachse 218 der Verliersicherung 210, vgl. auch Fig. 18, laufen dann schräg auf die Mittellängsachse 218 zu und laufen dann bis zu ihrem freien Ende wieder parallel zur Mittellängsachse 218.

Von dem Abschnitt 212 aus in Richtung auf das in Fig. 17 links unten dargestellte erste Ende 228 mit größerem Durchmesser der Verliersicherung 210 weist die Verliersicherung 210 eine Struktur in Form eines Ringkäfigs 220 auf. Dieser Ringkäfig 220 hat eine konvex ausgebauchte Form und besteht aus insgesamt sechs Streben 222, die durch schlitzförmige Ausnehmungen 224 voneinander getrennt sind. Die Ausnehmungen 224 beginnen unmittelbar anschließend an den Abschnitt 212 und enden vor dem in Fig. 17 unten links angeordneten Ende 228 der Verliersicherung 210. Die Streben 222 beginnen ebenfalls am Abschnitt 212 und laufen bis zum in Fig. 17 links unten dargestellten freien Ende 228 der Verliersicherung 210. Nach dem Ende der Ausnehmungen 224 sind jeweils zwei benachbarte Streben 222 miteinander verbunden. Ausgehend von dem in Fig. 17 unten links dargestellten Ende 228 der Verliersicherung 210 erstrecken sich insgesamt sechs Einschnitte 226 ein Stück weit in Richtung auf den Abschnitt 212. Die Einschnitte 226 erstrecken sich dabei ein Stück weit zwischen die Ausnehmungen 224 und jeder Einschnitt 226 ist mittig zwischen zwei Ausnehmungen 224 angeordnet. Anschließend an das in Fig. 17 links unten dargestellte Ende 228 der Ausnehmungen 224 verlaufen die Streben parallel zur Mittellängsachse 218. Daran anschließend verlaufen die Streben 222 konvex ausgebaucht bzw. nach außen gekrümmt bis zum Abschnitt 212. Durch die ausgebauchte Form der Streben 222, die Ausnehmungen 224 und die Einschnitte 226 kann die Verliersicherung 210 im Bereich des Ringkäfigs 220 zusammengedrückt werden, beispielsweise um in eine Bohrung mit kleinerem Durchmesser eingeschoben werden zu können. Der Ringkäfig 220 ist dabei dafür vorgesehen, federnd nach innen zusammengedrückt zu werden und dadurch eine radial nach außen wirkende Vorspannung aufzubringen, um in einer Bohrung festgeklemmt zu werden.

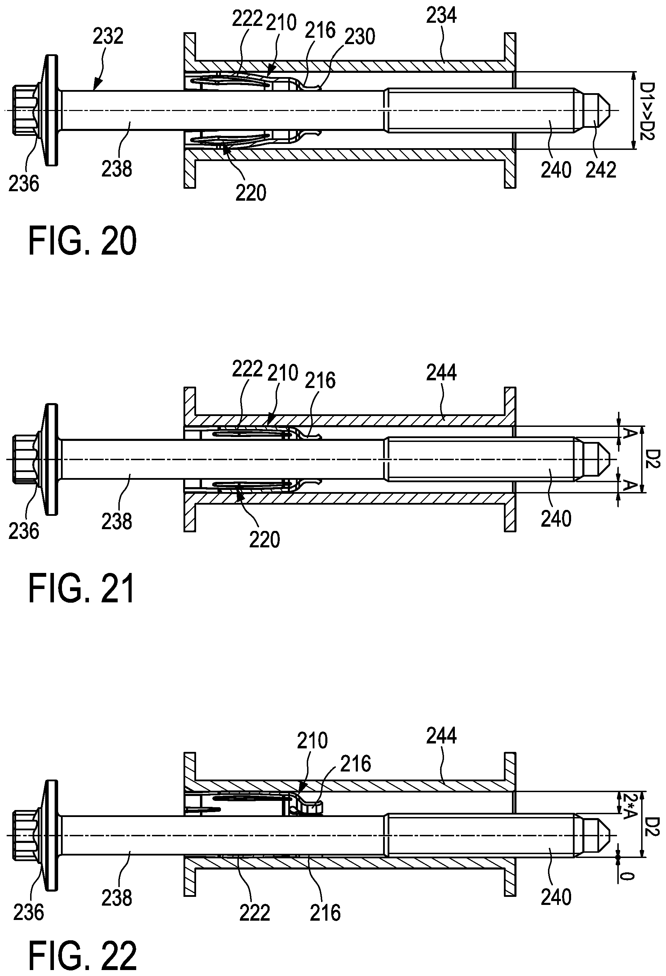

Der Durchmesser der Verliersicherung 210 ist an dem in Fig. 17 links unten dargestellten ersten Ende 228 größer als an dem Abschnitt 212. An dem in Fig. 17 rechts oben dargestellten zweiten Ende 230 ist der Durchmesser der Verliersicherung 210 dann wieder kleiner als im Abschnitt 212. Das in Fig. 17 rechts oben dargestellte Ende 230 der Verliersicherung ist dafür vorgesehen, am Schaft einer zu sichernden Schraube anzuliegen, vgl. auch die Fig. 20 bis 22.

Fig. 18 zeigt eine Seitenansicht der Verliersicherung 210. Es ist gut zu erkennen, dass sich der Durchmesser der Verliersicherung 210 ausgehend von einem ersten Ende 228 zunächst im Bereich des Ringkäfigs 220 etwas vergrößert. Dies wird durch die konvex nach außen ausgebauchte Form der Streben 222 bewirkt. Etwa auf halber Länge des Ringkäfigs 220 verringert sich der Durchmesser der Verliersicherung 210 wieder, um dann im Abschnitt 212 einen gegenüber dem ersten Ende 228 kleineren Wert anzunehmen. Wie beschrieben gehen vom Abschnitt 212 in Richtung auf das in Fig. 18 obere Ende 230 die Federzungen 214 aus. In Fig. 18 ist gut zu erkennen, dass die Federzungen 214 ausgehend vom Abschnitt 212, der die Form eines geschlossenen Rings aufweist, zunächst konvex nach außen gekrümmt in Richtung auf die Mittellängsachse 218 zulaufen, dann konkav wieder in eine Richtung parallel zur Mittellängsachse 218 gekrümmt sind, um dann bis zum zweiten Ende 230 wieder parallel zur Mittellängsachse 218 zu verlaufen. Der Durchmesser am zweiten Ende 230 ist kleiner als im Abschnitt 212.

Wie angeführt ist der Durchmesser der Verliersicherung 210 am ersten Ende 228 größer ist als am ringförmigen Abschnitt 212 und der ringförmige Abschnitt 212 weist einen größeren Durchmesser auf als das zweite Ende 230. Eine Bohrung, in die die Verliersicherung 210 eingesetzt wird, sollte einen Durchmesser aufweisen, der größer ist als der Außendurchmesser des Abschnitts 212 und etwas kleiner ist als der Durchmesser am ersten Ende 228 oder etwa so groß ist wie der Durchmesser am ersten Ende 228. Beim Einschieben in eine solche Bohrung wird der Ringkäfig 220 dadurch zusammengedrückt, so dass die Verliersicherung 210 relativ zu der Bohrung fixiert ist. Eine Schraube, die mit der Verliersicherung 210 gegen Herausfallen aus der Bohrung gesichert werden soll, sollte zweckmäßigerweise einen Schaftabschnitt mit einem Durchmesser aufweisen, der kleiner ist als oder genauso groß ist wie der Innendurchmesser am zweiten Ende 230, und einen weiteren Schaftabschnitt, üblicherweise einen Gewindeabschnitt, dessen Außendurchmesser größer ist als der Innendurchmesser am zweiten Ende 230. Dadurch kann die Verliersicherung 210 eine solche Schraube dann gegen Herausfallen aus der Bohrung sichern und die Schraube kann dennoch relativ zur Verliersicherung 210 in und entgegen deren Mittellängsachse verschoben werden.

Fig. 19 zeigt die Verliersicherung 210 der Fig. 17 in einer Ansicht von oben. Der Blick geht also in Fig. 19 auf das in Fig. 18 obere Ende 230. Gut zu erkennen sind die Federzungen 214, die durch die Einschnitte 216 voneinander getrennt sind. Weiter ist in Fig. 19 der Ringkäfig 220 mit den Streben 222 und den Ausnehmungen 224 zwischen den Streben 222 zu erkennen. Das untere Ende 228 der Verliersicherung 210, siehe Fig. 17 und Fig. 18, ist in Fig. 19 verdeckt.

Fig. 20 zeigt die Verliersicherung 210 der Fig. 17 bis 19 im eingebauten Zustand. Die Verliersicherung 210 ist in eine Buchse 234 eingeschoben worden, die eine zylindrische Bohrung mit dem Durchmesser D1 und an ihrem in Fig. 20 linken sowie rechten Ende einen in radialer Richtung vorstehenden Bund aufweist. Die Buchse 234 kann beispielsweise in ein Werkstück dadurch eingesetzt werden, dass sie bei der Herstellung des Werkstücks in dieses eingespritzt wird. Beispielsweise können Hauben, Deckel oder dergleichen mit der Buchse 234 versehen werden. Es wurde bereits ausgeführt, dass die Verliersicherung 210 allgemein in Bohrungen eingesetzt werden kann, in denen Schrauben gesichert werden sollen. Solche Bohrungen können auch in massive Werkstücke gebohrt werden oder in Buchsen vorgesehen sein, die dann in geeigneter Weise in oder an dem Werkstück fixiert werden.

In der Darstellung der Fig. 20 ist eine Maschinenschraube 232 dargestellt, die abschnittsweise in die Bohrung der Buchse 234 eingeführt ist. Die Schraube 232 weist einen Kopf 236, einen glatten, gewindefreien Schaftabschnitt 238 und einen Gewindeabschnitt 240 auf. Zwischen dem Ende des Gewindeabschnitts 240 und dem freien, dem Kopf 236 gegenüberliegenden Ende ist noch ein gewindefreier Abschnitt 242 mit gegenüber dem Gewinde 240 verringertem Außendurchmesser und kegelstumpfförmiger Spitze vorgesehen. Dieser Abschnitt 242 dient dazu, die Schraube 232 möglichst leicht in eine Gewindebohrung einführen zu können, auch wenn die Schraube 232 in radialer Richtung leicht versetzt zu der Gewindebohrung ist.

Der Kopf 236 weist einen Außendurchmesser auf, der größer ist als der Innendurchmesser D1 der Bohrung in der Buchse 234. In einer Richtung von links nach rechts in Fig. 20 kann die Schraube 232 somit nicht aus der Buchse 234 herausfallen. Der Außendurchmesser des glatten Schaftabschnitts 238, der sich an den Kopf 236 anschließt, ist kleiner als der Außendurchmesser des Gewindeabschnitts 240. Da der Innendurchmesser D1 der Bohrung in der Buchse 234 größer ist, bei der dargestellten Ausführungsform etwa doppelt so groß wie der Außendurchmesser des Gewindeabschnitts 240, könnte die Schraube 232 in Fig. 20 nach links aus der Buchse 234 herausfallen, wenn nicht die Verliersicherung 210 vorgesehen wäre. Die Federzungen 216 der Verliersicherung 210 liegen mit ihren Bereichen, die vom zweiten Ende 230 der Verliersicherung 210 ausgehen und parallel zur Mittellängsachse der Verliersicherung 210 verlaufen, auf dem Außenumfang des glatten Schaftabschnitts 238 der Schraube 232 an. Selbst wenn die Federzungen 216 mit einem gewissen Federdruck auf dem Schaftabschnitt 238 anliegen, so kann die Schraube 236 in Fig. 20 immer noch nach links und rechts relativ zur Buchse 234 verschoben werden. Ein Herausfallen der Schraube 236 in einer Richtung nach links in Fig. 20 wird dadurch verhindert, dass dann, wenn die Schraube 236 ausgehend von der Position der Fig. 20 nach links relativ zur Buchse 234 verschoben wird, das linke Ende des Gewindeabschnitts 240 an dem zweiten Ende 230 der Verliersicherung 210 anstößt und die Schraube 236 dadurch daran gehindert wird, sich weiter nach links aus der Buchse 234 herauszubewegen.

Die Verliersicherung 210 wird dabei selbst nicht aus der Bohrung der Buchse 234 herausgezogen, da die Verliersicherung 210 im Bereich des Ringkäfigs 220 reibschlüssig in der Bohrung der Buchse 234 gehalten wird. Dies wird dadurch erreicht, dass die Streben 222 eine Vorspannkraft nach außen aufbringen. Die Streben 222 können zusätzlich auf ihrer Außenseite mit einer Beschichtung versehen sein, die einen höheren Grip bzw. eine höhere Haftfestigkeit zwischen den Streben 222 und der Bohrung der Buchse 234 bewirken.

Ausgehend vom Zustand der Fig. 20 kann die Schraube 236 in radialer Richtung zur Bohrung der Buchse 234 verschoben werden. Dadurch können Toleranzen zwischen einer Position der Buchse 234 und einer Position einer Gewindebohrung, in die das Gewinde 240 der Schraube 236 eingeschraubt werden soll, kompensiert werden. Es ist in Fig. 20 zu erkennen, dass die Schraube 236 in radialer Richtung, in Fig. 20 also nach oben oder nach unten, so weit verschoben werden kann, bis der Außendurchmesser des Gewindes 240 an der Innenwand der Bohrung der Buchse 234 anliegt. Eine solche radiale Verschiebung wird durch die Verliersicherung 210 ermöglicht, wie beispielsweise Fig. 22 zu entnehmen ist. Die Verliersicherung 210 weist hierzu mehrere, insbesondere sechs, Federzungen 214 auf, die gleichmäßig über den Umfang der Verliersicherung verteilt sind. Im Rahmen der Erfindung sollten mindestens die gleichmäßig über den Umfang verteilte Federzungen vorgesehen sein, um eine radiale Beweglichkeit des Schafts einer Schraube zu ermöglichen.

Fig. 20 zeigt die Verliersicherung 210 angeordnet in der Buchse 234, die einen Innendurchmesser D1 aufweist. Dieser Innendurchmesser D1 ist größer als ein Durchmesser D2 einer Bohrung einer Buchse 244, die in Fig. 21 dargestellt ist.

Fig. 21 zeigt die Schraube 236 und die Verliersicherung 210, die in die Bohrung der Buchse 244 mit dem Innendurchmesser D2 eingesetzt sind. Wie bereits ausgeführt wurde, ist der Innendurchmesser D2 kleiner als der Innendurchmesser D1 der Bohrung der Buchse 234 der Fig. 20.

Die Verliersicherung 210 liegt mit ihren Federzungen 216 wieder auf dem Außenumfang des gewindefreien, glatten Schaftabschnitts 238 der Schraube 236 an und verhindert dadurch, dass die Schraube 236 in Fig. 21 von rechts nach links aus der Buchse 244 herausgezogen werden kann. Aufgrund des kleineren Innendurchmessers D2 der Bohrung der Buchse 244 sind die Streben 222 im Bereich des Ringkäfigs 220 der Verliersicherung 210 stärker zusammengedrückt als im Zustand der Fig. 20. Unverändert bewirken die Streben 222 aber durch ihre radial nach außen wirkende Federvorspannung, dass die Verliersicherung 210 sicher reibschlüssig in der Bohrung der Buchse 244 fixiert ist. Die Schraube 236 kann ausgehend von dem in Fig. 21 dargestellten Zustand in radialer Richtung zur Bohrung der Buchse 244 versetzt werden, in Fig. 21 also nach oben und unten. Der Betrag dieses möglichen Versatzes, in Fig. 21 nach oben bzw. unten, ist in Fig. 21 jeweils mit dem Buchstaben A angedeutet.

Fig. 22 zeigt die Schraube 236 in der Buchse 244 der Fig. 21, wobei die Schraube 236 aber gegenüber dem Zustand der Fig. 21 in radialer Richtung um die Länge A verschoben wurde, in Fig. 22 also nach unten. Das Gewinde 240 liegt nun einseitig an der Innenwand der Bohrung der Buchse 244 an. Dies ist in Fig. 22 unten dargestellt. Zu dem gegenüberliegenden, in Fig. 22 oben dargestellten Wandabschnitt der Bohrung der Buchse 244 hat das Gewinde 240 nun einen Abstand von 2A. Auch in diesem Zustand der Fig. 22 kann die Schraube 236 noch in eine Gewindebohrung eingeschraubt werden. Die Verliersicherung 210 sorgt also zum einen dafür, dass die Schraube 236 nicht aus der Buchse 244 herausrutschen kann und ermöglicht darüber hinaus auch die Kompensation von Toleranzen zwischen einer Position der Buchse 244 und der Position einer nicht dargestellten Gewindebohrung, in die die Schraube 236 eingebracht werden soll. Darüber hinaus kann die Verliersicherung 210 auch Toleranzen beim Innendurchmesser D1, D2 einer Bohrung oder Hülse 234, 244 kompensieren.

Beispielsweise können die Buchsen 234, 244 in eine Kunststoffhaube bei deren Herstellung eingespritzt werden. Wenn die Kunststoffhaube dann beispielsweise auf ein Maschinengehäuse oder auch auf einen Zylinderkopf aufgesetzt wird, können durch die Verliersicherungen 210 Toleranzen zwischen der Position der Gewindebohrungen und der Position der Buchsen 234, 244 in der Kunststoffhaube kompensiert werden. Die Verliersicherung 210 kann darüber hinaus auch Toleranzen des Innendurchmessers der Bohrungen in den Buchsen 234, 244 kompensieren.

Im maximal radial ausgelenkten Zustand der Schraube 236 relativ zur Buchse 244, der in Fig. 22 dargestellt ist, sind die Federstreben 216 und die Streben 222 der Verliersicherung 210 auf der einen Seite vollständig flachgedrückt. Auf der gegenüberliegenden Seite, die in Fig. 22 oben dargestellt ist, liegen die Federzungen bzw. eine Federzunge 216 nicht mehr auf dem Schaftabschnitt 238 der Schraube 236 auf. Auch in dem Zustand der Fig. 22 sorgt die Verliersicherung 210 aber immer noch dafür, dass die Schraube 236 nicht aus der Buchse 244 herausgezogen werden kann, in Fig. 22 also nach links, und die Verliersicherung 210 ist durch die Streben 222 immer noch in der Bohrung der Buchse 244 fixiert.

Um die Verliersicherung 210 in die Bohrung der Buchsen 234, 244 einzubringen, bestehen verschiedene Möglichkeiten. Beispielsweise aber nicht erfindungsgemäß kann die Verliersicherung 210 zunächst einmal ohne die Schraube 236 in die Bohrung der Buchse 234, 244 eingeschoben werden. Erst dann kann die Schraube 236 in die Verliersicherung 210 eingeschoben werden. Bei diesem Einschieben weichen die Federzungen 216 radial nach außen aus, bis das Gewinde 240 die Federzungen 216 passiert hat. Dann federn die Federzungen 216 wieder nach innen in die in Fig. 20 oder 21 dargestellte Position.

Alternativ und erfindungsgemäß kann die Verliersicherung 210 auch zunächst auf den Schaft der Schraube 236 aufgeschoben werden. Hierzu wird die Schraube 236 einfach vom Ende 228 her in die Verliersicherung 210 eingeschoben. Die Federzungen 216 weichen dabei wieder radial nach außen aus und federn dann wieder nach innen, wenn das Gewinde 240 der Schraube 236 die Federzungen 216 passiert hat. Zusammen mit der Schraube 236 kann die Verliersicherung 210 dann in die Bohrung der Buchse 234, 244 eingeschoben und positioniert werden.

Die Verliersicherung 210 kann auch als Federzungenhülse bezeichnet werden.

Bei der Ausführungsform der Fig. 20 bis 22 liegen die Federzungen 216 der Verliersicherung 210 auf dem gewindefreien und glatten Schaftabschnitt 238 auf. Eine Verliersicherung kann auch dadurch bewirkt werden, dass die Federzungen 216 auf dem Gewinde einer Schraube aufliegen, und die Schraube kann beispielsweise auch eine Umfangsnut an ihrem Schaft aufweisen, in die die Federzungen 216 dann einrasten können.

## Patentansprüche

1. Verliersicherung (210) für eine Schraube mit einer ringförmigen Hülse zum Einsetzen in eine Durchgangsbohrung in einem Werkstück, wobei die ringförmige Hülse mit wenigstens einer blattförmigen Federzunge (214) versehen ist, die sich ausgehend von der ringförmigen Hülse erstreckt und in Richtung auf eine Mittellängsachse (218) der Hülse vorragt, **dadurch gekennzeichnet, dass** sich die wenigstens eine blattförmige Federzunge (214) ausgehend von der ringförmigen Hülse zunächst parallel zur Mittellängsachse (218) der Hülse, dann schräg zur Mittellängsachse (218) auf die Mittellängsachse (218) zu und wenigstens bis kurz vor das freie Ende der blattförmigen Federzunge (214) wieder parallel zur Mittellängsachse (218) erstreckt und dass die ringförmige Hülse einen Ringkäfig (220) mit mehreren Streben (222) aufweist, wobei der Ringkäfig (220) in radialer Richtung federnd zusammengedrückt werden kann, um die Verliersicherung (210) in einer Bohrung zu fixieren.

2. Verliersicherung nach Anspruch 1, **dadurch gekennzeichnet, dass** die ringförmige Hülse einen von einem ersten Rand zu einem zweiten Rand durchgehenden Schlitz aufweist.

3. Verliersicherung nach Anspruch 1, **dadurch gekennzeichnet, dass** die ringförmige Hülse einen Abschnitt (212) aufweist, der einen geschlossenen Ring bildet.

4. Verliersicherung nach Anspruch 1 oder 2, **dadurch gekennzeichnet, dass** drei blattförmige Federzungen (214), insbesondere 3 bis 8 Federzungen (214), gleichmäßig über den Umfang der ringförmigen Hülse verteilt sind.

5. Verliersicherung nach einem der vorstehenden Ansprüche, **dadurch gekennzeichnet, dass** die wenigstens eine blattförmige Federzunge sich unmittelbar vor ihrem freien Ende schräg zur Mittellängsachse von dieser weg erstreckt.

6. Verliersicherung nach einem der vorstehenden Ansprüche, **dadurch gekennzeichnet, dass** die ringförmige Hülse und die wenigstens eine Federzunge (214) aus einem Edelstahlblech, aus einem Metall, aus einem Nichteisenmetall, aus einem Kunststoff oder aus einem Hybridwerkstoff geformt sind.

7. Verliersicherung nach wenigstens einem der vorstehenden Ansprüche, **dadurch gekennzeichnet, dass** die wenigstens eine Federzunge sich ausgehend von einem ersten Rand der Hülse erstreckt und dass die Hülse im Bereich eines zweiten Randes, der dem ersten Rand gegenüberliegt, mit wenigstens einem radial nach außen, von der Mittellängsachse weg, vorragenden Vorsprung versehen ist.

8. Verliersicherung nach wenigstens einem der vorstehenden Ansprüche, **dadurch gekennzeichnet, dass** die ringförmige Hülse aus einem bandförmigen Materialstreifen gebogen ist.

9. Verliersicherung nach Anspruch 8, **dadurch gekennzeichnet, dass** zwischen dem Beginn und dem Ende des Materialstreifen aus Blech im fertiggestellten Zustand der ringförmigen Hülse ein Zwischenraum liegt.

10. Verliersicherung nach wenigstens einem der vorstehenden Ansprüche, **dadurch gekennzeichnet, dass** die Hülse einen Abschnitt (212) aufweist, der einen geschlossenen Ring bildet, wobei in Richtung einer Mittellängsachse (218) des Rings gesehen, die wenigstens eine Federzunge (214) von dem, den geschlossenen Ring bildenden Abschnitt ausgeht und wobei eine Längserstreckung der Federzunge (214) das Einfache bis Dreifache der Länge des den geschlossenen Ring bildenden Abschnitts (212) beträgt.

11. Verliersicherung nach wenigstens einem der vorstehenden Ansprüche, **dadurch gekennzeichnet, dass** zwei in Umfangsrichtung nebeneinander angeordnete Federzungen (214) mittels eines Einschnitts (216) in der Hülse voneinander getrennt sind.

12. Montageeinheit mit einer Schraube (232), einer Buchse (234) und einer Verliersicherung (210) nach wenigstens einem der vorstehenden Ansprüche, wobei die Verliersicherung (210) in die Buchse (234) eingesetzt ist und sich die Schraube (232) wenigstens abschnittsweise in die Buchse (234) hineinerstreckt und von der Verliersicherung (210) in der Buchse (234) gehalten ist.

13. Montageeinheit mit einer Schraube (232), einem Blechbauteil und einer Verliersicherung (210) nach wenigstens einem der vorstehenden Ansprüche 1 bis 11, wobei die Verliersicherung (210) und die Schraube (232) in eine Durchgangsöffnung des Blechbauteils eingesetzt sind.

14. Verfahren zum Montieren einer Schraube (232), und einer Verliersicherung (210) nach einem der vorstehenden Ansprüche 1 bis 11 in einer Bohrung, wobei zunächst die Verliersicherung (210) auf den Schaft der Schraube (232) aufgeschoben und dann die Verliersicherung (210) zusammen mit der Schraube (232) in die Bohrung eingeschoben und positioniert wird.

## Claims

1. Securing means (210) for a screw having an annular sleeve for insertion in a through-hole in a workpiece, wherein the annular sleeve is provided with at least one plate-like resilient tongue (214) which extends from the annular sleeve and which projects in the direction toward a longitudinal centre axis (218) of the sleeve, **characterized in that** the at least one plate-like resilient tongue (214) extends from the annular sleeve initially parallel with the longitudinal centre axis (218) of the sleeve, then obliquely relative to the longitudinal centre axis (218) toward the longitudinal centre axis (218) and, at least up to a location just in front of the free end of the plate-like resilient tongue (214), again parallel with the longitudinal centre axis (218), and **in that** the annular sleeve has an annular cage (220) having a plurality of struts (222), wherein the annular cage (220) can be resiliently compressed in a radial direction in order to fix the securing means (210) in a hole.

2. Securing means according to Claim 1, **characterized in that** the annular sleeve has a slot which is continuous from a first edge to a second edge.

3. Securing means according to Claim 1, **characterized in that** the annular sleeve has a portion (212) which forms a closed ring.

4. Securing means according to Claim 1 or 2, **characterized in that** three plate-like resilient tongues (214), in particular from 3 to 8 resilient tongues (214), are distributed uniformly over the circumference of the annular sleeve.

5. Securing means according to one of the preceding claims, **characterized in that**, directly in front of the free end thereof, the at least one plate-like resilient tongue extends obliquely relative to the longitudinal centre axis away from it.

6. Securing means according to one of the preceding claims, **characterized in that** the annular sleeve and the at least one resilient tongue (214) are formed from a high-grade steel plate, from a metal, from a non-ferrous metal, from a plastics material or from a hybrid material.

7. Securing means according to at least one of the preceding claims, **characterized in that** the at least one resilient tongue extends from a first edge of the sleeve and **in that** the sleeve is provided in the region of a second edge which is opposite the first edge with at least one projection which projects radially outwardly away from the longitudinal centre axis.

8. Securing means according to at least one of the preceding claims, **characterized in that** the annular sleeve is bent from a band-like material strip.

9. Securing means according to Claim 8, **characterized in that** an intermediate space is located between the beginning and the end of the material strip made of sheet metal in the finished state of the annular sleeve.

10. Securing means according to at least one of the preceding claims, **characterized in that** the sleeve has a portion (212) which forms a closed ring, wherein, when viewed in the direction of a longitudinal centre axis (218) of the ring, the at least one resilient tongue (214) extends from the portion which forms the closed ring, and wherein a longitudinal extent of the resilient tongue (214) is from one time to three times the length of the portion (212) forming the closed ring.

11. Securing means according to at least one of the preceding claims, **characterized in that** two resilient tongues (214) which are arranged beside each other in a circumferential direction are separated from each other by means of an incision (216) in the sleeve.

12. Mounting unit having a screw (232), a bush (234) and a securing means (210) according to at least one of the preceding claims, wherein the securing means (210) is inserted in the bush (234) and the screw (232) extends at least partially into the bush (234) and is retained in the bush (234) by the securing means (210).

13. Mounting unit having a screw (232), a sheet metal component and a securing means (210) according to at least one of the preceding Claims 1 to 11, wherein the securing means (210) and the screw (232) are inserted in a through-opening of the sheet metal component.

14. Method for mounting a screw (232) and a securing means (210) according to one of the preceding Claims 1 to 11 in a hole, wherein initially the securing means (210) is pushed on the shaft of the screw (232) and then the securing means (210) is inserted together with the screw (232) into the hole and positioned.

## Revendications

1. Sécurité anti-perte (210) pour une vis avec une douille annulaire à insérer dans un alésage traversant dans une pièce, la douille annulaire étant pourvue d'au moins une languette élastique en forme de feuille (214), qui s'étend à partir de la douille annulaire et fait saillie en direction d'un axe longitudinal central (218) de la douille, **caractérisée en ce que** l'au moins une languette élastique en forme de feuille (214) s'étend à partir de la douille annulaire d'abord parallèlement à l'axe longitudinal central (218) de la douille, puis s'étend obliquement par rapport à l'axe longitudinal central (218) vers l'axe longitudinal central (218) et au moins jusqu'à peu avant l'extrémité libre de la languette élastique en forme de feuille (214) à nouveau parallèlement à l'axe longitudinal central (218) et **en ce que** la douille annulaire présente une cage annulaire (220) avec plusieurs entretoises (222), la cage annulaire (220) pouvant être comprimée élastiquement dans la direction radiale pour fixer la sécurité anti-perte (210) dans un alésage.

2. Sécurité anti-perte selon la revendication 1, **caractérisée en ce que** la douille annulaire présente une fente continue d'un premier bord à un deuxième bord.

3. Sécurité anti-perte selon la revendication 1, **caractérisée en ce que** la douille annulaire présente une section (212) qui forme un anneau fermé.

4. Sécurité anti-perte selon la revendication 1 ou 2, **caractérisée en ce que** trois languettes élastiques en forme de feuille (214), notamment 3 à 8 languettes élastiques (214), sont réparties uniformément sur la circonférence de la douille annulaire.

5. Sécurité anti-perte selon l'une quelconque des revendications précédentes, **caractérisée en ce que** l'au moins une languette élastique en forme de feuille s'étend immédiatement avant son extrémité libre en s'écartant de l'axe longitudinal central en oblique par rapport à celui-ci.

6. Sécurité anti-perte selon l'une quelconque des revendications précédentes, **caractérisée en ce que** la douille annulaire et l'au moins une languette élastique (214) sont formés à partir d'une tôle d'acier inoxydable, d'un métal, d'un métal non ferreux, d'un plastique ou d'un matériau hybride.

7. Sécurité anti-perte selon au moins l'une quelconque des revendications précédentes, **caractérisée en ce que** l'au moins une languette élastique s'étend à partir d'un premier bord de la douille et **en ce que** la douille est pourvue, dans la zone d'un deuxième bord qui est opposé au premier bord, d'au moins une protubérance faisant saillie radialement vers l'extérieur, en s'éloignant de l'axe longitudinal central.

8. Sécurité anti-perte selon au moins l'une quelconque des revendications précédentes, **caractérisée en ce que** la douille annulaire est courbée à partir d'une bande de matériau en forme de ruban.

9. Sécurité anti-perte selon la revendication 8, **caractérisée en ce qu'**un espace intermédiaire se trouve entre le début et la fin de la bande de matériau en tôle à l'état achevé de la douille annulaire.

10. Sécurité anti-perte selon au moins l'une quelconque des revendications précédentes, **caractérisée en ce que** la douille présente une section (212) formant un anneau fermé ; vu dans la direction d'un axe longitudinal central (218) de l'anneau, l'au moins une languette élastique (214) s'étendant à partir de la section formant l'anneau fermé, et une étendue longitudinale de la languette élastique (214) étant de une à trois fois la longueur de la section formant l'anneau fermé (212).

11. Sécurité anti-perte selon au moins l'une quelconque des revendications précédentes, **caractérisée en ce que** deux languettes élastiques (214) agencées côte à côte dans la direction circonférentielle sont séparées l'une de l'autre au moyen d'une entaille (216) dans la douille.

12. Unité de montage avec une vis (232), une douille (234) et une sécurité anti-perte (210) selon au moins l'une quelconque des revendications précédentes, la sécurité anti-perte (210) étant insérée dans la douille (234) et la vis (232) s'étendant au moins en partie dans la douille (234) et étant maintenue dans la douille (234) par la sécurité anti-perte (210).

13. Unité de montage avec une vis (232), un composant en tôle et une sécurité anti-perte (210) selon au moins l'une quelconque des revendications 1 à 11 précédentes, dans laquelle la sécurité anti-perte (210) et la vis (232) sont insérées dans une ouverture traversante du composant en tôle.

14. Procédé de montage d'une vis (232), et d'une sécurité anti-perte (210) selon l'une quelconque des revendications 1 à 11 précédentes dans un alésage, la sécurité anti-perte (210) étant d'abord enfilée sur la tige de la vis (232), puis la sécurité anti-perte (210) étant insérée et positionnée conjointement avec la vis (232) dans l'alésage.
